# EUROPEAN PATENT APPLICATION

(11) **EP 4 372 855 A1**
(43) Date of publication of application: **22.05.2024**
(21) Application number: 22887616.5
(22) Date of filing: 26.10.2022
(51) Int. Cl.: H01M 10/04, G01B 11/24

(54) **MANUFACTURING METHOD OF ELECTRODE ASSEMBLY**

(30) Priority: 26.10.2021 KR 20210143905
(71) Applicant: LG Energy Solution, Ltd., Seoul 07335 (KR)
(72) Inventor: SEO, Tai Joon, Daejeon 34122 (KR); PARK, Lae Seo, Daejeon 34122 (KR)
(74) Representative: Goddar, Heinz J.
(86) International application number: PCT/KR2022/016491
(87) International publication number: WO 2023/075420

(57) **Abstract**

An embodiment of the present disclosure provides a method of manufacturing an electrode assembly by stacking two or more unit cells with a second separator interposed therebetween, the unit cells each having a positive electrode, a first separator, and a negative electrode that are sequentially stacked, the method including: inspecting an aligned state of the positive and negative electrodes included in a lower unit cell disposed below the corresponding unit cell before the unit cell is stacked; and correcting a stacked position of the unit cell to be stacked when the inspection result indicates that the aligned state has a defect.

## Description

### [Technical Field]

### CROSS-REFERENCE TO RELATED APPLICATION

This application claims priority to and the benefit of Korean Patent Application No. 1 0-2021-0143905 filed in the Korean Intellectual Property Office on October 26, 2021, the entire contents of which are incorporated herein by reference.

The present disclosure relates to a method of manufacturing an electrode assembly, and more particularly, to a method of manufacturing an electrode assembly, which is capable of minimizing the effect of misalignment of an electrode even when the electrode is misaligned.

### [Background Art]

A rapid increase in the use of fossil fuels has increased the need for the use of alternative energy or clean energy. Power generation and power accumulation using electrochemistry have been most actively studied in the field of alternative energy or clean energy.

At present, a representative example of an electrochemical element using electrochemical energy is a secondary battery. A region in which the secondary battery is used tends to be expanded gradually.

Recently, as technical research and demands for portable devices such as portable computers, mobile phones, and cameras increase, there are rapidly increasing demands for secondary batteries as energy sources. Among the secondary batteries, many studies have been conducted on lithium secondary batteries having high energy density and action potential, a long cycle lifespan, and a low self-discharge rate. In addition, the lithium secondary batteries have been commercially available and widely used.

In addition, as interest in environmental issues increases, many studies have been conducted on electric vehicles, hybrid electric vehicles, and the like which may be substituted for vehicles such as gasoline vehicles and diesel vehicles that use fossil fuel and is one of the main causes of air pollution. Nickel-hydrogen-metal secondary batteries are mainly used as power sources for the electric vehicles and the hybrid electric vehicle. However, studies are being actively conducted on the use of the lithium secondary batteries having high energy density and high discharge voltage, and some lithium secondary batteries have been commercially available.

Such a lithium secondary battery is manufactured by manufacturing positive and negative electrodes by forming an electrode mixture layer by coating a current collector with slurry, which contains a positive or negative electrode active material, a binder, and a conductive material, and drying the slurry, interposing a separator between the positive electrode and the negative electrode, and disposing an electrode assembly, which is made by laminating the positive electrode, the negative electrode, and the separator, into a battery casing together with an electrolyte.

In addition, the electrode assembly may be manufactured by stacking or folding respective components. However, the electrode assembly may be manufactured by manufacturing unit cells, which each include the electrodes and the separator, and stacking or folding the unit cells.

That is, in general, the electrode assembly may be manufactured by manufacturing stacks (unit cells), which each have a layered structure including the positive electrode, the separator, and the negative electrode, and stacking the plurality of unit cells with the separators interposed therebetween. In the method of manufacturing an electrode assembly, the electrode assembly is formed by disposing one unit cell, disposing a separator sheet on the unit cell, and then stacking an additional unit cell. Alternatively, the electrode assembly is formed by repeatedly performing a process of configuring the separator as an uppermost or lowermost layer of the unit cell and then sequentially stacking the unit cells.

In this process, the unit cells are stacked based on positions of central portions of the unit cells in order to align the unit cells. In this case, in case that a defective unit cell, in which an error is present at a position of the electrode (the negative electrode or the positive electrode) included in the unit cell, is present, the positive and negative electrodes are misaligned because of the misalignment of the electrode present in the defective unit cell even when the unit cells are properly aligned based on the central portions thereof. For this reason, there is a problem in that a defect rate of the electrode assembly increases.

### [Disclosure]

### [Technical Problem]

The present disclosure has been made in an effort to provide a method of manufacturing an electrode assembly, which is capable of minimizing misalignment in the entire electrode assembly even when misalignment of electrodes is present in a unit cell during a process of manufacturing the electrode assembly by stacking the unit cells.

However, the object to be achieved by the embodiments of the present disclosure is not limited to the above-mentioned object but may be variously expanded without departing from the technical spirit of the present disclosure.

### [Technical Solution]

An embodiment of the present disclosure provides a method of manufacturing an electrode assembly by stacking two or more unit cells with a second separator interposed therebetween, the unit cells each having a positive electrode, a first separator, and a negative electrode that are sequentially stacked, the method including: inspecting an aligned state of the positive electrode and negative electrode included in a lower unit cell disposed below a unit cell to be stacked before the unit cell to be stacked is stacked; and correcting a stacked position of the unit cell to be stacked when the inspection result indicates that the aligned state has a defect.

The correcting of the stacked position of the unit cell may include: detecting a first interval between one side edge portion of the negative electrode included in the lower unit cell and one side edge portion of the positive electrode of the lower unit cell and a second interval between the other side edge portion of the negative electrode included in the lower unit cell and the other side edge portion of the positive electrode of the lower unit cell; and moving the stacked position of the unit cell to be stacked toward a side at which one of the first interval and the second interval is smaller than the other of the first interval and the second interval.

After the moving of the stacked position of the unit cell is ended, one side edge portion and the other side edge portion of the negative electrode of the unit cell may be respectively coincident with or disposed inside one side edge portion and the other side edge portion of the first separator of the lower unit cell.

The defect of the aligned state may be a case in which an interval between an edge of the negative electrode and an edge of the positive electrode included in the lower unit cell at one side of the lower unit cell is different from an interval between an edge of the negative electrode and an edge of the positive electrode at the other side of the lower unit cell.

A stacked position, which is made before the correcting of the stacked position of the unit cell, may be a position at which a center of the lower unit cell coincides with a center of the unit cell, and the unit cell, which is newly disposed after the correcting of the stacked position of the unit cell, may be disposed at the stacked position made before the correcting of the stacked position of the unit cell.

The center of the lower unit cell may be indicated by a laser beam emitted from a laser emission part disposed above the lower unit cell and the unit cell.

The inspecting of the aligned state of the positive electrode and negative electrode included in the lower unit cell may include: emitting light from a light source disposed below the lower unit cell; and deriving an interval between an edge of the positive electrode and an edge of the negative electrode of the lower unit cell by detecting shadows of the positive electrode and negative electrode, which are made by the light, by a detection part disposed above the lower unit cell.

The inspecting of the aligned state of the positive electrode and negative electrode included in the lower unit cell may include: detecting a position of the positive electrode by a detection part disposed above the lower unit cell; detecting a position of the negative electrode by emitting light from a light source disposed below the lower unit cell; and deriving an interval between an edge of the positive electrode and an edge of the negative electrode of the lower unit cell by combining the position of the positive electrode and the position of the negative electrode.

The second separator may be integrated with the unit cell or the lower unit cell at a lower side of the unit cell or an upper side of the lower unit cell.

The lower unit cell and the unit cell may define one set, and the second separator, which is disposed between the lower unit cell and the unit cell in one set, may be bent at an edge of the unit cell and formed continuously with the second separator disposed between the lower unit cell and the unit cell in another adjacent set.

### [Advantageous Effect]

According to the embodiments of the present disclosure, it is possible to prevent the occurrence of a defect by minimizing misalignment in the entire electrode assembly even when the misalignment of electrodes is present in the unit cell during the process of manufacturing the electrode assembly by stacking the unit cells.

The effects of the present disclosure are not limited to the aforementioned effects, and other effects, which are not mentioned above, will be clearly understood by those skilled in the art from the claims.

### [Description of the Drawings]

FIGS. 1 to 4 are views illustrating a method of manufacturing an electrode assembly according to an embodiment of the present disclosure.
FIG. 5 is a view for explaining a first modified example of a method of measuring an interval between electrodes of a lower unit cell according to the embodiment of the present disclosure.
FIGS. 6a and 6b are views for explaining a second modified example of the method of measuring an interval between the electrodes of the lower unit cell according to the embodiment of the present disclosure.
FIG. 7 is a view illustrating an electrode assembly obtained by a method of manufacturing an electrode assembly according to yet another embodiment of the present disclosure.

### [Mode for Invention]

Hereinafter, several embodiments of the present disclosure will be described in detail with reference to the accompanying drawings so that those with ordinary skill in the art to which the present disclosure pertains may easily carry out the embodiments. The present disclosure may be implemented in various different ways and is not limited to the embodiments described herein.

A part irrelevant to the description will be omitted to clearly describe the present disclosure, and the same or similar constituent elements will be designated by the same reference numerals throughout the specification.

In addition, a size and thickness of each constituent element illustrated in the drawings are arbitrarily shown for convenience of description, but the present disclosure is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

In addition, throughout the specification, the word "in a plan view" means when an object is viewed from above, and the word "in a cross-sectional view" means when a cross section made by vertically cutting an object is viewed from a lateral side.

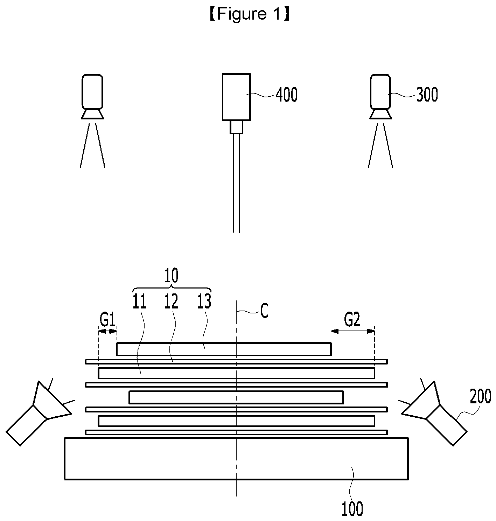

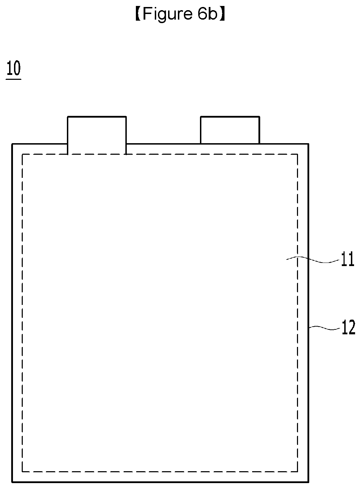

Hereinafter, a method of manufacturing an electrode assembly according to an embodiment of the present disclosure will be described with reference to FIGS. 1 to 6a and 6b.

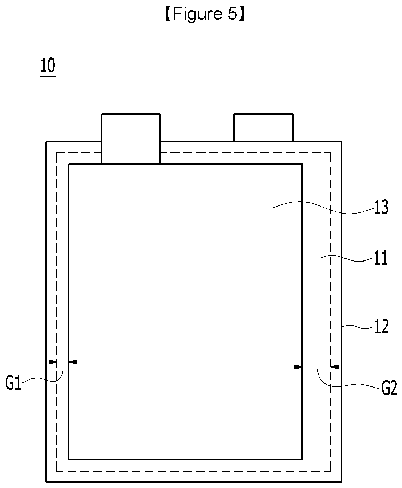

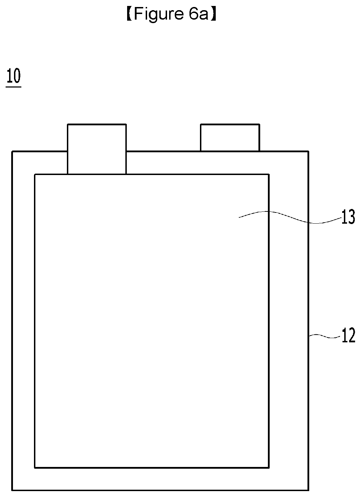

FIGS. 1 to 4 are views illustrating a method of manufacturing an electrode assembly according to an embodiment of the present disclosure, FIG. 5 is a view for explaining a first modified example of a method of measuring an interval between electrodes of a lower unit cell according to the embodiment of the present disclosure, and FIGS. 6a and 6b are views for explaining a second modified example of the method of measuring an interval between the electrodes of the lower unit cell according to the embodiment of the present disclosure.

With reference to FIGS. 1 to 4, the method of manufacturing an electrode assembly according to the embodiment of the present disclosure is provided to manufacture an electrode assembly in which positive electrodes and negative electrodes are alternately stacked and separators are positioned between the positive electrodes and the negative electrodes. In particular, the method manufactures the electrode assembly obtained by manufacturing stacks (unit cells), which each have a layered structure including the positive electrode, the separator, and the negative electrode, and stacking the plurality of unit cells with the separators interposed therebetween.

First, as illustrated in FIG. 1, separators and unit cells are stacked on a stack table 100. In the present embodiment, particularly, an example will be described in which a unit cell, which is stacked for the first time, is defined as a lower unit cell, and another unit cell is additionally stacked after the lower unit cell is inspected. However, the present disclosure is not limited thereto. Each of the described steps may be applied to each step of stacking the unit cell.

A lower unit cell 10 having a negative electrode, a first separator, and a positive electrode that are sequentially stacked is stacked on a second separator. In this case, for convenience of description, the components included in the lower unit cell 10 will be referred to as a lower negative electrode 11, a first lower separator 12, and a lower positive electrode 13 and described in order to distinguish the components included in the lower unit cell 10 from components included in a unit cell 20 to be described below. In addition, however, the present disclosure is not limited thereto. The components included in the unit cells are not different from one another. Further, a second separator 30 is described as not being included in the unit cell, but this is merely for convenience of description. The structure including the negative electrode, the separator, and the positive electrode may be defined as the unit cell. However, the present disclosure is not particularly limited thereto.

The lower unit cell 10 may be stacked by setting a position thereof such that a center of the lower unit cell 10 is disposed at a predetermined position. For example, the centers of the unit cells, which are disposed before the lower unit cell 10 is disposed, may be disposed to coincide with a center C of the lower unit cell 10. In this case, a position, at which the lower unit cell 10 may be disposed and aligned, may be indicated by a laser beam or the like emitted from a laser emission part 400 disposed above the stack table 100 used to manufacture an electrode stack.

An aligned state between the lower positive electrode 13 and the lower negative electrode 11 included in the lower unit cell 10 is inspected before the unit cell 20 is additionally stacked on the lower unit cell 10 after the lower unit cell 10 is stacked. That is, as illustrated in FIG. 1, a first interval G1 between one end of the lower positive electrode 13 and one end of the lower negative electrode 11 may be measured, a second interval G2 between the other end of the lower positive electrode 13 and the other end of the lower negative electrode 11 may be measured, and the first interval G1 and the second interval G2 are compared, such that the aligned state may be identified. In this case, an interval between the lower positive electrode 13 and the lower negative electrode 11 may be detected by a light source 200, which emits light from below the lower positive electrode 13 and the lower negative electrode 11, and a detection part 300 disposed above the light source 200. A specific method will be described below with reference to FIGS. 5, 6a, and 6b.

In case that the detected first interval G1 and second G2 are equal to each other, the unit cells may be continuously stacked at the same position, i.e., stacked at the same position so that the center C indicated by the laser beam coincides with the centers of the stacked unit cells. However, as illustrated in FIG. 1, in case that the first interval G1 and second interval G2 between the lower positive electrode 13 and the lower negative electrode 11 of the lower unit cell 10 are different from each other, and particularly, the lower positive electrode 13 is biased toward any one side, a process of correcting this biased situation is performed. That is, in general, because the negative electrode of the electrode assembly has a larger area than the positive electrode, the lower positive electrode 13 is biased toward any one side (overhangs), like the lower unit cell 10 in FIG. 1, in case that the arrangement of the unit cell is misaligned during the process of manufacturing the unit cell. For this reason, the first interval G1 and second interval G2 between the lower positive electrode 13 and the lower negative electrode 11 become different from each other. In this case, in case that the unit cells are stacked without position correction on the unit cell subsequently stacked, a defect may occur because of the misalignment of the lower positive electrode 13. Therefore, in the present embodiment, the alignment of the lower unit cell 10 is detected after the lower unit cell 10 is stacked, and a step of correcting the misalignment is performed in the event of the misaligned arrangement.

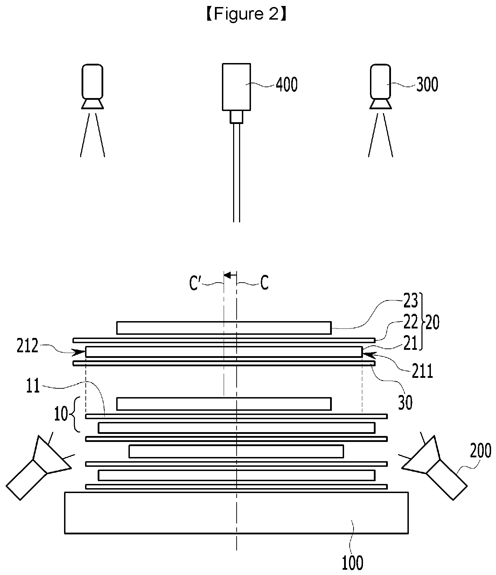

Next, as illustrated in FIG. 2, a stacked position of the unit cell 20 stacked on the lower unit cell 10 is corrected.

The unit cell 20 refers to a unit cell stacked on the lower unit cell 10. The unit cell 20 is stacked on the lower unit cell 10 with the second separator 30 interposed therebetween. Further, the unit cell 20 includes a negative electrode 21, a first separator 22, and a positive electrode 23 disposed sequentially from below.

The stacked position of the unit cell 20 is adjusted to the extent that a defect occurs on a state in which the lower unit cell 10 is previously aligned. That is, an alignment criterion is moved to one of the first interval G1 and second interval G2 between the lower positive electrode 13 and the lower negative electrode 11 of the lower unit cell 10 that is smaller than the other of the first interval G1 and second interval G2. For example, as illustrated in FIG. 2, because the first interval G1 at the left side in FIG. 2 has a smaller size, the center C is moved leftward so that the center of the unit cell 20 coincides with a second center C'. In this case, the amount by which the center C is moved to the second center C' may be calculated by a controller (not illustrated) in consideration of a previously detected difference between the first interval G1 and second interval G2. In particular, if a movement amount is excessive, an overhanging degree may further increase. Therefore, particularly, the movement amount is controlled within a range in which two opposite ends 211 and 212 of the negative electrode 21 included in the unit cell 20 are coincident with the corresponding ends of the first separator 12 included in the lower unit cell 10 or the two opposite ends 211 and 212 are disposed inside the corresponding ends of the first separator 12.

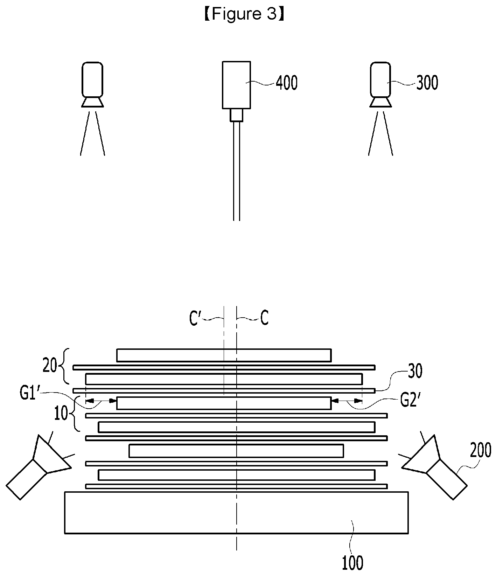

Next, as illustrated in FIG. 3, the process of stacking the unit cells 20 is completed.

In the stacked state, a value of a difference between a corrected first interval G1' between one end of the negative electrode 21 included in the unit cell 20 and one end of the lower positive electrode 13 included in the lower unit cell 10 and a corrected second interval G2' between the other end of the negative electrode 21 included in the unit cell 20 and the other end of the lower positive electrode 13 included in the lower unit cell 10 becomes smaller than a value of a difference between the first interval G1 and the second interval G2. That is, a value of the misalignment between the negative electrode and the positive electrode becomes smaller than a value made before the correction is performed, such that the overhanging degree may be mitigated.

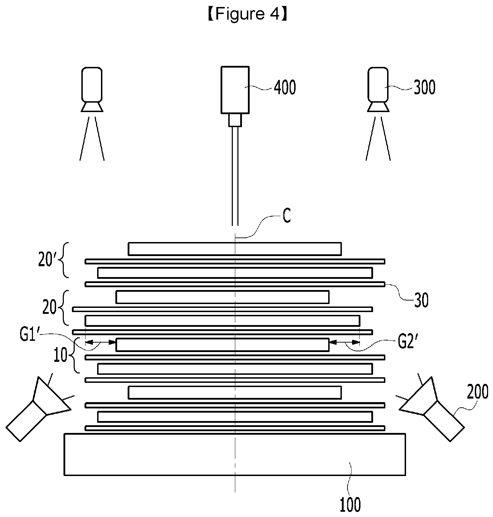

Next, as illustrated in FIG. 4, an additional unit cell 20' is stacked.

In this case, the additional unit cell 20' is stacked to be aligned at a position identical to the original, initial stacked position of the unit cell. In this process, the position of the center C, which is the criterion, is indicated at the same position by the laser emission part 400, such that the unit cells may be continuously aligned at the accurate position.

According to the above-mentioned stacking method, even when a cell, in which an aligned state of the positive electrode and negative electrode is defective, is included in the unit cell, a degree of the corresponding defect may be mitigated by being dispersed to the adjacent cells. Therefore, it is possible to reduce a defect risk caused by the defective cell.

Next, a method of measuring an interval between the electrodes of the lower unit cell according to the embodiment of the present disclosure will be described with reference to FIGS. 5, 6a, and 6b.

FIG. 5 is a view for explaining an embodiment of a method of measuring an interval between the electrodes of the lower unit cell according to the embodiment of the present disclosure, and FIGS. 6a and 6b are views for explaining a modified example of the method of measuring an interval between the electrodes of the lower unit cell according to the embodiment of the present disclosure.

FIG. 5 illustrates the lower unit cell 10 when viewed from the detection part 300 disposed above the lower unit cell 10 in a state in which the lower unit cell 10 is irradiated with light emitted from the light source 200 in FIGS. 1 to 4. In case that the lower unit cell 10 is detected by the detection part 300, e.g., a camera or the like from above the lower unit cell 10, it is difficult to accurately detect a position of the lower negative electrode 11 disposed below the first separator 12 having a largest area. However, because the first separator 12 has semi-permeability to light, a shadow of the lower negative electrode 11 is observed at a location above the lower negative electrode 11 when light is emitted from below the lower negative electrode 11. Therefore, as illustrated in FIG. 5, the position of the lower negative electrode 11 may be detected. That is, the portion indicated by the dotted line in FIG. 5 indicates a shadow of the lower negative electrode 11. Therefore, both the shadow of the lower negative electrode 11 and the boundary of the lower positive electrode 13 are shown in a state in which the light source 200 disposed below the lower negative electrode 11 emits light. Therefore, the detection part 300 disposed above the lower negative electrode 11 may detect the end of the lower negative electrode 11, the end of the lower positive electrode 13, and the first interval G1 and the second interval G2 between the lower negative electrode 11 and the lower positive electrode 13 at one time.

FIGS. 6a and 6b illustrate the lower unit cell 10 when viewed from the detection part 300 disposed above the lower unit cell 10 in a state (FIG. 6a) in which the light source 200 does not emit light and a state (FIG. 6b) in which the light source 200 emits intense light in FIGS. 1 to 4. In the state in which light is not emitted, as illustrated in FIG. 6a, the lower negative electrode 11 is covered by the first separator 12, such that the position of the lower negative electrode 11 is not detected, but the position of the lower positive electrode 13 may be more accurately detected. Further, as illustrated in FIG. 6b, in case that the light source 200 emits intense light, the shadow of the lower negative electrode 11 becomes clearer, and an edge of the lower positive electrode 13 is not clearly detected because of the intense light. Therefore, it is possible to more accurately detect the position of the lower negative electrode 11. Therefore, the position of the lower positive electrode 13 is detected in the state in which the light source 200 is turned off, and the position of the lower positive electrode 11 is detected in the state in which the light source 200 emits more intense light. Therefore, the first interval G1 and second interval G2 between the lower negative electrode 11 and the lower positive electrode 13 may be calculated on the basis of the positions.

As described above, the first interval G1 and second interval G2 between the lower negative electrode 11 and the lower positive electrode 13 may be accurately detected by appropriately selecting the embodiment described with reference to FIG. 5 or the process of the modified example described with reference to FIGS. 6a and 6b depending on the process situation and environment.

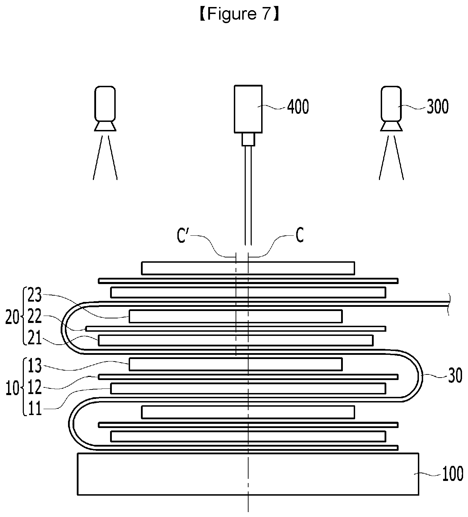

Next, a method of manufacturing an electrode assembly according to yet another embodiment will be described with reference to FIG. 7.

FIG. 7 is a view illustrating an electrode assembly obtained by a method of manufacturing an electrode assembly according to yet another embodiment of the present disclosure.

The manufacturing method according to yet another embodiment differs from that in the previously described embodiment only in terms of a shape of the second separator 30 and is identical in remaining configurations to that in the previously described embodiment. Therefore, a description of the identical configurations will be omitted.

As illustrated in FIG. 7, unlike the configuration in which the second separators 30 disposed between the lower unit cell 10 and 20 are separated and included as the components of the respective unit cell, the second separator 30 is integrated as a whole, such that the respective unit cells and the second separator 30 are disposed as the second separator 30 is folded. That is, the second separator 30 is disposed on the stack table 100, the unit cell is disposed on the second separator 30, the second separator 30 is folded to cover the corresponding unit cell, and then the lower unit cell 10 is disposed in the folded state. Thereafter, the positions of the lower positive electrode 13 and the lower negative electrode 11 in the lower unit cell 10 are detected before the second separator 30 is folded reversely again, the stacked position of the unit cell 20 is determined, and then the second separator 30 is folded to cover the lower unit cell 10. Next, the electrode assembly is completely manufactured by repeatedly performing the process of disposing the unit cell 20 at the determined stacked position and then folding the second separator 30 to cover the unit cell 20.

As described above, even in the case of the process of integrating the second separator 30 and repeatedly stacking and folding the second separator 30, the alignment between the positive electrode and negative electrode included in the unit cell is detected, and the stacked position is corrected to mitigate a corresponding defect, i.e., an overhang value of the adjacent unit cells in case that the defect is present. Therefore, it is possible to minimize a risk caused by an overhanging defect and obtain the electrode stack that suppresses a defect.

Although preferred examples of the present disclosure have been described in detail hereinabove, the right scope of the present disclosure is not limited thereto, and many variations and modifications of those skilled in the art using the basic concept of the present disclosure, which is defined in the following claims, will also belong to the right scope of the present disclosure.

### <Description of Reference Numerals>

10: Lower unit cell
20: Unit cell
100: Stack table
200: Light source
300: Detection part
400: Laser emission part

## Claims

1. A method of manufacturing an electrode assembly by stacking two or more unit cells with a second separator interposed therebetween, the unit cells each having a positive electrode, a first separator, and a negative electrode that are sequentially stacked, the method comprising:
inspecting an aligned state of the positive electrode and negative electrode included in a lower unit cell disposed below a unit cell to be stacked before the unit cell to be stacked is stacked; and
correcting a stacked position of the unit cell to be stacked when the inspection result indicates that the aligned state has a defect.

2. The method of claim 1, wherein:
the correcting of the stacked position of the unit cell comprises:
detecting a first interval between one side edge portion of the negative electrode included in the lower unit cell and one side edge portion of the positive electrode of the lower unit cell and a second interval between the other side edge portion of the negative electrode included in the lower unit cell and the other side edge portion of the positive electrode of the lower unit cell; and
moving the stacked position of the unit cell to be stacked toward a side at which one of the first interval and the second interval is smaller than the other of the first interval and the second interval.

3. The method of claim 2, wherein:
after the moving of the stacked position of the unit cell is ended, one side edge portion and the other side edge portion of the negative electrode of the unit cell are respectively coincident with or disposed inside one side edge portion and the other side edge portion of the first separator of the lower unit cell.

4. The method of claim 2, wherein:
the defect of the aligned state is a case in which an interval between an edge of the negative electrode and an edge of the positive electrode included in the lower unit cell at one side of the lower unit cell is different from an interval between an edge of the negative electrode and an edge of the positive electrode at the other side of the lower unit cell.

5. The method of claim 2, wherein:
a stacked position, which is made before the correcting of the stacked position of the unit cell, is a position at which a center of the lower unit cell coincides with a center of the unit cell, and
wherein the unit cell, which is newly disposed after the correcting of the stacked position of the unit cell, is disposed at the stacked position made before the correcting of the stacked position of the unit cell.

6. The method of claim 5, wherein:
the center of the lower unit cell is indicated by a laser beam emitted from a laser emission part disposed above the lower unit cell and the unit cell.

7. The method of claim 1, wherein:
the inspecting of the aligned state of the positive electrode and negative electrode included in the lower unit cell comprises:
emitting light from a light source disposed below the lower unit cell; and
deriving an interval between an edge of the positive electrode and an edge of the negative electrode of the lower unit cell by detecting shadows of the positive and negative electrodes, which are made by the light, by a detection part disposed above the lower unit cell.

8. The method of claim 1, wherein:
the inspecting of the aligned state of the positive electrode and negative electrode included in the lower unit cell comprises:
detecting a position of the positive electrode by a detection part disposed above the lower unit cell;
detecting a position of the negative electrode by emitting light from a light source disposed below the lower unit cell; and
deriving an interval between an edge of the positive electrode and an edge of the negative electrode of the lower unit cell by combining the position of the positive electrode and the position of the negative electrode.

9. The method of claim 1, wherein:
the second separator is integrated with the unit cell or the lower unit cell at a lower side of the unit cell or an upper side of the lower unit cell.

10. The method of claim 1, wherein:
the lower unit cell and the unit cell define one set, and the second separator, which is disposed between the lower unit cell and the unit cell in one set, is bent at an edge of the unit cell and formed continuously with the second separator disposed between the lower unit cell and the unit cell in another adjacent set.
